# EUROPEAN PATENT APPLICATION

(11) **EP 1 207 316 A1**
(43) Date of publication of application: **22.05.2002**
(21) Application number: 01917543.9
(22) Date of filing: 28.03.2001
(51) Int. Cl.: F16D 7/10, F16F 15/133

(54) **POWER TRANSMISSION MECHANISM**

(30) Priority: 29.03.2000 JP 2000090296; 11.08.2000 JP 2000245373
(71) Applicant: Kabushiki Kaisha Toyota Jidoshokki, Kariya-shi, Aichi-ken 448-8671 (JP)
(72) Inventor: KIMURA, Kazuya, c/o KK TOYOTA JIDOSHOKKI, Kariya-shi, Aichi 448-8671 (JP); URYU, Akifumi, c/o KK TOYOTA JIDOSHOKKI, Kariya-shi, Aichi 448-8671 (JP); KAWATA, Takeshi, c/o KK TOYOTA JIDOSHOKKI, Kariya-shi, Aichi 448-8671 (JP); KANAI, Akinobu, c/o KK TOYOTA JIDOSHOKKI, Kariya-shi, Aichi 448-8671 (JP)
(74) Representative: Leson, Thomas Johannes Alois, Dipl.-Ing.
(86) International application number: JP0102565
(87) International publication number: WO0173308

(57) **Abstract**

An engaging projection is engaged with an engaging recess to connect a pulley and a receiving member to each other so that power is transmitted. The engaging recess deforms with respect to the pulley and the receiving member. During the power transmission between the pulley and the receiving member, an elastic member permits engaging recess to deform, thereby enabling the pulley to rotate relative to the receiving member in a predetermined angular range. In this state, the engaging projection normally abuts against a sliding surface of the engaging recess at a neutral position, and the contact position of the engaging projection and the engaging recess separates from the neutral position in accordance with the increase of the load on the receiving member. As the contact position separates from the neutral position, the inclination angle of the sliding surface with respect to the circumferential direction of the rotary bodies gradually increases.

## Description

### Technical Field

The present invention relates to power transmission mechanisms that are capable of dampening variation in transmission torque (load) between a first rotary body and a second rotary body.

### Background Art

Japanese Unexamined Patent Publication No. 10-267045 discloses this type of power transmission mechanism. As shown in Fig. 12, each of a pulley 101, which is a rotary body of an external drive source, and a hub 102, which is a rotary body of a driven device, includes engaging recesses 104. Each engaging recess 104 on the pulley 101 and the associated engaging recess 104 on the hub 102 are engaged with an elastic member 103, which is located between the engaging recesses 104 on the pulley and the hub 102. This engagement transmits power from the pulley 101 to the hub 102. When the power (torque) is transmitted from the external power source to the driven device, the elastic member 103 elastically deforms. This permits the pulley 101 to relatively rotate with the hub 102. The relative rotational angle between the pulley 101 and the hub 102 varies in a predetermined range in accordance with the transmission torque.

Thus, even though variation in the output torque of the external drive source or variation in the drive torque of another device driven by the external drive source causes variation in the transmission torque between the pulley 101 and the hub 102, the variation is dampened through the relative rotation of the pulley 101 and the hub 102 in a predetermined angular range.

The above mentioned publication describes a torque limit function, that is, a function, which stops power transmission between the pulley 101 and the hub 102 by disengaging the elastic member 103 from the engaging recess 104 when the drive torque of the driven device is excessive. However, according to the disclosed art, it is obvious that the variation in the transmission torque is damped by suitably setting the elastic coefficient of the elastic member 103.

However, in the above mentioned power transmission mechanism, the elastic member 103 is cylindrical and has a cylindrical surface 103a. Each engaging recess 104 has a curved concave surface 104a, the curvature of which is the same as that of the cylindrical surface 103a of the elastic member 103. When the variation of the transmission torque is zero, substantially all area of the curved concave surface 104a of each engaging recess 104 abuts against the elastic member 103.

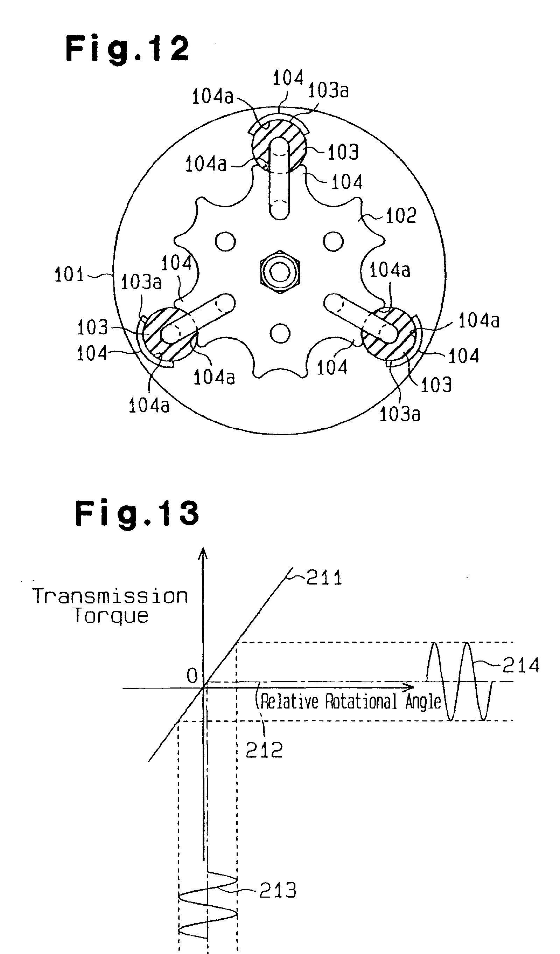

Therefore, the torque transmission between the engaging recess 104 and the elastic member 103 is performed at both ends of the curved concave surface 104a of the engaging recess 104. Therefore, the relative rotation of the pulley 101 and the hub 102 is performed against the strong elastic force of the elastic member 103. As shown by a straight line 211 in Fig. 13, in the conventional power transmission mechanism, the transmission torque between the pulley 101 and the hub 102 abruptly changes in all zone of the predetermined angular range, in which the pulley 101 and the hub 102 relatively rotate.

To easily explain the problems caused by the characteristics shown by the straight line 211, it is assumed that the driven device (hub 102) rotates at a constant speed and the pulley 101 rotates in accordance with the torque variation in the external drive source. In this case, the torque variation in the external drive source causes the pulley 101 to relatively rotate with the hub 102.

For example, the driven device is driven by a small drive torque, that is, the transmission torque between the pulley 101 and the hub 102 is small and the relative rotational angle between the pulley 101 and the hub 102 is small (see a dashed line having long and short segments 212 in Fig. 13). In this state, a great torque variation is caused in the external drive source and the relative inclination angle of the pulley 101 with respect to the hub 102 (see a curved line 213 in Fig. 13) is varied. In this case, around the valleys of the torque variation in the external drive source (left side peaks of the curved line 213), the pulley 101 relatively rotates with the hub 102 in the opposite direction to the normal torque transmission direction from the external drive source to the driven device.

As a result, the amplitude of the torque variation (see a curved line 214 in Fig. 13) caused in the power transmission between the hub 102 and the driven device becomes excessive. This causes the torque in the opposite direction (negative torque) from the normal torque transmission direction around the valleys of the torque variation (lower side peaks of the curved line 214). Therefore, for example, if there is a backlash in the power transmission path between the hub 102 and the driven device or at the fitting portion between the rotating members in the driven device, the rotating members relatively rotate in accordance with the positive and the negative torque. Therefore, abnormal vibration and noise are caused and the rotating members are worn. This enlarges the backlash.

It is an objective of the present invention to provide a power transmission mechanism that is capable of dampening variation in transmission torque between the first rotary body and the second rotary body when power is transmitted between the rotary bodies. The power transmission mechanism also allows only a little negative torque in the driven device when a great torque variation occurs in the external drive source.

### Disclosure of the Invention

To achieve the above objective, a power transmission mechanism according to the present invention includes a first rotary body, a second rotary body, and an elastic member. The first rotary body has an engaging projection. The second rotary body is located coaxial with the first rotary body. The second rotary body has an engaging recess. The engaging projection engaging with the engaging recess to connect the first and second rotary bodies to each other such that power transmission is permitted. At least the engaging projection or recess being configured to change its position with respect to the first and second rotary bodies. The elastic member, which enables the rotary bodies to rotate relative to each other in a predetermined angular range during the power transmission between the first and second rotary bodies by changing the position of at least the engaging projection or recess. During the power transmission between the first and second rotary bodies, the engaging projection normally abuts against a sliding surface of the engaging recess at a neutral position. The contact position of the sliding surface of the engaging recess and the engaging projection separates from the neutral position in accordance with the increase of the transmission torque between the rotary bodies. As the contact position separates from the neutral position, the inclination angle of the sliding surface of the engaging recess with respect to the circumferential direction of the rotary bodies gradually increases.

In the specification, changing the position of the engaging portion refers to the deformation of the engaging portion or the engaging portion moving or rotating on the rotary body.

### Brief Description of the Drawings

Fig. 1 is a cross-sectional view showing a compressor that has a power transmission mechanism of a first embodiment according to the present invention;
Fig. 2 is an enlarged partial view showing the power transmission mechanism of the compressor in Fig. 1, which is a cross-sectional view taken along line 2-2 of Fig. 3;
Fig. 3 is a front view showing the power transmission mechanism from which a cover is removed;
Fig. 4 is an enlarged partial front view showing the power transmission mechanism;
Fig. 5 is a view explaining an operation of the power transmission mechanism;
Fig. 6 is a view explaining the torque limiting operation of the power transmission mechanism;
Fig. 7 is a view explaining the torque limiting operation of the power transmission mechanism;
Fig. 8 is a graph showing the operational characteristics of the power transmission mechanism;
Fig. 9 is a cross-sectional view showing a power transmission mechanism of a second embodiment according to the present invention;
Fig. 10 is a view showing a modification of the power transmission mechanism;
Fig. 11 is a view showing a further modification of the power transmission mechanism;
Fig. 12 is a front view illustrating a prior art power transmission mechanism; and
Fig. 13 is a graph showing the operational characteristics of the prior art power transmission mechanism.

### Best Mode for Carrying Out the Invention

First embodiment, or power transmission mechanism of the present invention that is applied to a swash plate type variable displacement compressor for vehicle air conditioner, will now be described.

### First Embodiment

### (Swash Plate Type Variable Displacement Compressor)

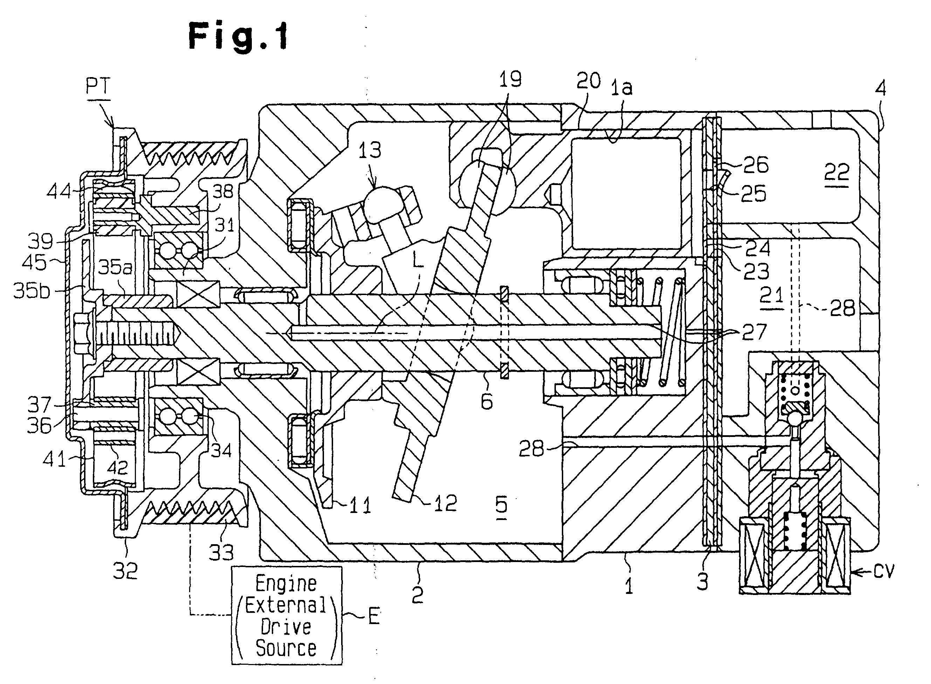

As shown in Fig. 1, the swash plate type variable displacement compressor (hereinafter, referred to as the compressor) includes a cylinder block 1, a front housing member 2, which is secured to a front end of the cylinder block 1, and a rear housing member 4, which is secured to a rear end of the cylinder block 1 with a valve plate 3 arranged between the cylinder block 1 and the rear housing member 4. The cylinder block 1, the front housing member 2, and the rear housing member 4 form a housing of the compressor. The left side of Fig. 1 is referred to as the front end and the right side of Fig. 1 is referred to as the rear end.

A crank chamber 5 is formed in a space encompassed by the cylinder block 1 and the front housing member 2. A drive shaft 6 is rotationally supported in the crank chamber 5. In the crank chamber 5, a lug plate 11 is secured to the drive shaft 6 to rotate integrally with the drive shaft 6.

A front end of the drive shaft 6 is connected to an engine E of a vehicle, which is an external drive source, through a power transmission mechanism PT. The power transmission mechanism PT may be a clutch mechanism (for example, an electromagnetic clutch mechanism) that selectively transmits and blocks power in accordance with external electric controlling. Alternatively, the power transmission mechanism PT may be a constant transmitting type clutchless mechanism (for example, a belt combined with a pulley) that does not include the clutch mechanism. In the first embodiment, the power transmission mechanism PT is a clutchless type. A clutch type power transmission mechanism PT will be described in detail in the second embodiment.

The crank chamber 5 accommodates a swash plate 12. The swash plate 12 is supported to slide along the drive shaft 6 and incline with respect to the drive shaft 6. A hinge mechanism 13 is located between the lug plate 11 and the swash plate 12. Thus, the swash plate 12 rotates integrally with the lug plate 11 and the drive shaft 6 through the hinge mechanism 13 and inclines with respect to the drive shaft 6 while sliding along the drive shaft 6 in the axial direction L.

A plurality of cylinder bores 1a (only one is shown in Fig. 1) are formed in the cylinder block 1 and are located around the drive shaft 6. Each cylinder bore 1a receives a single-headed piston 20 that reciprocates in the cylinder bore 1a. Front and rear openings of each cylinder bore 1a are closed by the valve plate 3 and the piston 20. A compression chamber is formed in each cylinder bore 1a. The volume of each compression chamber is varied in accordance with movement of the associated piston 20. Each piston 20 is connected to the outer periphery of the swash plate 12 through shoes 19. Thus, when the swash plate 12 rotates integrally with the drive shaft 6, the shoes 19 convert the rotation of the swash plate 12 to the movement of each piston 20.

The valve plate 3 and the rear housing member 4 form a suction chamber 21 and a discharge chamber 22. Corresponding to each cylinder bore 1a, the valve plate 3 includes an inlet port 23, an inlet valve 24 that selectively opens and closes the inlet port 23, an outlet port 25, and an outlet valve 26 that selectively opens and closes the output port 25. Each inlet port 23 connects the associated cylinder bore 1a to the suction chamber 21. Each outlet port 25 connects the associated cylinder bore 1a to the discharge chamber 22.

When each piston 20 moves from the top dead center to the bottom dead center, refrigerant gas flows from the suction chamber 21 to the associated cylinder bore 1a through the associated inlet port 23 opened by the inlet valve 24. When the piston 20 moves from the bottom dead center to the top dead center, the refrigerant gas is compressed to a predetermined pressure in the cylinder bore 1a and is discharged to the discharge chamber 22 through the associated outlet port 25 opened by the outlet valve 26.

In the compressor, the pressure in the crank chamber 5 is adjusted by an electromagnetic control valve CV, thus changing the inclination angle of the swash plate 12 to a certain value between a maximum value (corresponding to the state of Fig. 1) and a minimum value.

A bleeding passage 27 connects the crank chamber 5 to the suction chamber 21. A supply passage 28 connects the discharge chamber 22 to the crank chamber 5. The electromagnetic control valve CV is located in the supply passage 28. A control device (not shown) adjusts the opening size of the control valve CV to adjust the amount of the highpressure refrigerant gas that flows from the discharge chamber 22 to the crank chamber 5 through the supply passage 28. The pressure in the crank chamber 5 is determined in accordance with equilibrium between this amount and the amount of the gas that flows from the crank chamber 5 to the suction chamber 21 through the bleeding passage 27. When the pressure in the crank chamber 5 varies, the pressure difference between the crank chamber 5 and each cylinder bore 1a varies. This changes the inclination angle of the swash plate 12, thus varying the stroke of each piston 20, or the displacement of the compressor.

### (Structure of Power Transmission Mechanism)

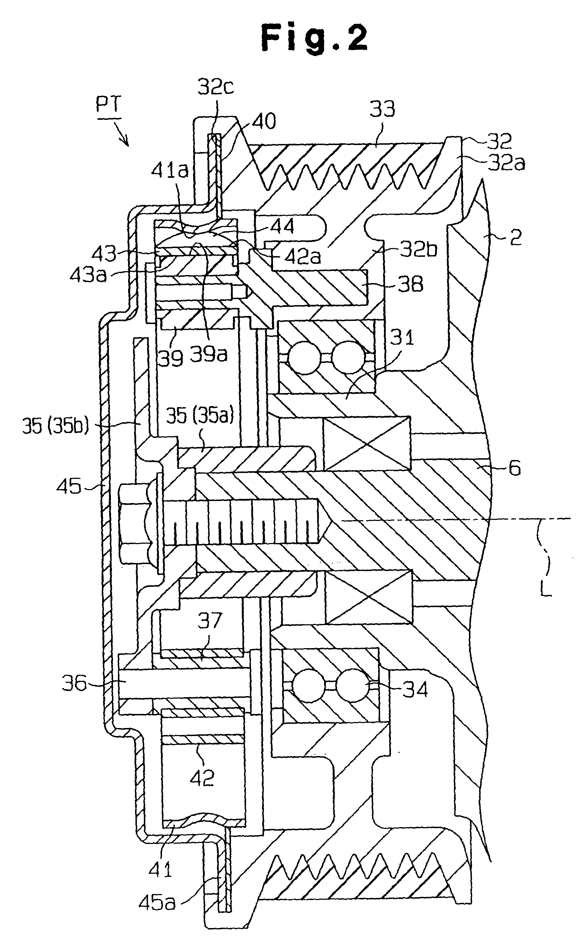

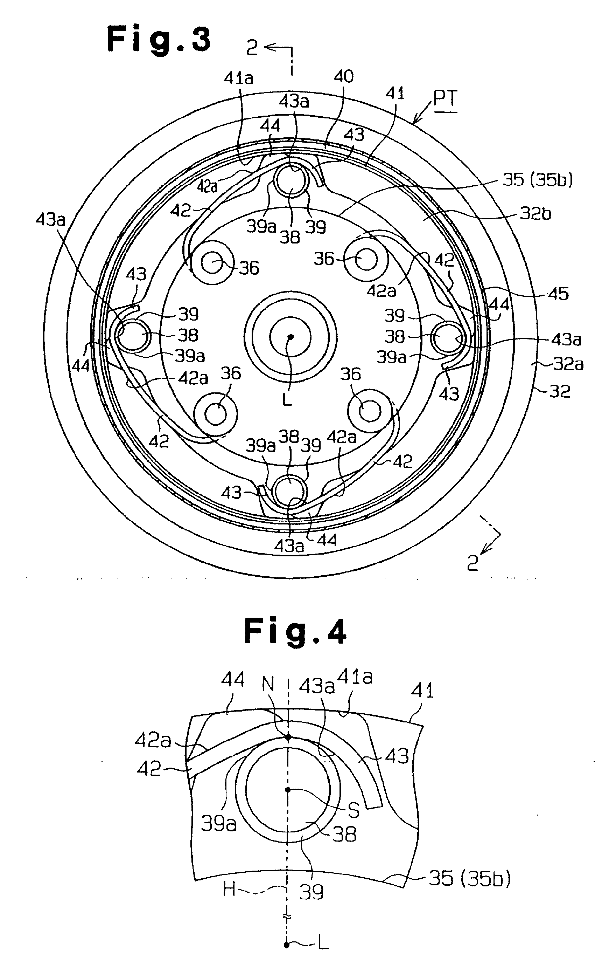

As shown in Figs. 2 and 3, a support cylinder 31 projects from an outer side of the front housing member 2 and encompasses the front end of the drive shaft 6. A pulley 32, or a first rotary body, includes a cylindrical belt receiving portion 32a and an annular support portion 32b. A belt 33 is connected to the output shaft of the engine E (see Fig. 1) and is wound around the belt receiving portion 32a. The support portion 32b projects radially inward from the inner side of the belt receiving portion 32a.

The support cylinder 31 rotationally supports the pulley 32 through a bearing 34 at the support portion 32b. That is, the pulley 32 is located coaxial with the drive shaft 6 around the axis L and rotates relative to the drive shaft 6.

A receiving member 35, or a second rotary body, is secured to the front end of the drive shaft 6 and rotates integrally with the drive shaft 6. The receiving member 35 includes a cylindrical member 35a and a disk-like hub 35b. The cylindrical member 35a is fitted around the front end of the drive shaft 6. The hub 35b engages with the front end of the cylindrical member 35a. Although not illustrated, a structure such as a spline engagement structure and a key structure engages the drive shaft 6 with the cylindrical member 35a and the cylindrical member 35a with the hub 35b to restrict the relative rotation with respect to the drive shaft 6.

A plurality of (in this embodiment, four) support pins 36 are securely fitted in a rear outer circumferential portion of the hub 35b. The support pins 36 are located around the axis L at predetermined intervals (in this embodiment, 90 degrees). A cylindrical sleeve 37 is fitted around each support pin 36 through appropriate pressure. Thus, if a predetermined rotation force acts on each sleeve 37, the sleeve 37 rotates relative to the associated support pin 36.

A plurality of (in this embodiment, four) engaging pins 38 are securely fitted in the front side of the support portion 32b of the pulley 32. The engaging pins 38 are located around the axis L at predetermined intervals (in this embodiment, 90 degrees). Each engaging pin 38 rotationally supports a cylindrical roller 39, or an engagement projection and rolling component. The rollers 39 are located radially outward from the sleeves 37 in the pulley 32.

An annular fitting groove 32c is formed in a front inner circumferential side of the belt receiving portion 32a of the pulley 32. A flat annular engaging member 40 is fitted in the fitting groove 32c at an outer circumferential portion of the engaging member 40. An annular restricting ring 41 is connected to the pulley 32 through the inner periphery of the engaging member 40. The restricting ring 41 is located coaxial with the pulley 32 around the axis L and encompasses the rollers 39. An intermediate portion of an inner circumferential side of the restricting ring 41 that opposes a cylindrical surface (sliding surface) 39a of each roller 39 projects smoothly inward, thus forming a restricting surface 41a.

A power transmitting arm 42 is a plate spring and is located between each sleeve 37 and the corresponding roller 39. That is, a proximal portion of each power transmitting arm 42 is securely wound around the sleeve 37 of the associated support pin 36. Each power transmitting arm 42 connects each sleeve 37 to the corresponding roller 39, while forming a curve that slightly projects in a radial outward direction of the pulley 32. Each roller 39 is located radially outward from the corresponding sleeve 37 and is offset 90 degrees clockwise from the sleeve 37, as viewed in Fig. 3.

A distal portion of each power transmitting arm 42 has a section that projects radially outward from the roller 39 of the corresponding engaging pin 38 at a position between the roller 39 and the restricting surface 41a of the restricting ring 41. The distal portion of each power transmitting arm 42 also has a section that is curved in a radial inward direction of the pulley 32 along the cylindrical surface 39a of the corresponding roller 39. This structure forms an engaging recess 43 near the distal end of each power transmitting arm 42 for engaging the corresponding roller 39. In other words, each power transmitting arm 42 of the receiving member 35 engages with the corresponding roller 39 of the pulley 32 at the engaging recess 43. This enables power transmission between the receiving member 35 and the pulley 32. Further, the receiving member 35 is connected to the pulley 32 such that the receiving member 35 rotates relative to the pulley 32 in a predetermined angular range.

A fulcrum portion 44 is formed of, for example, rubber and is secured to an outer side 42a of each power transmitting arm 42 that faces the restricting surface 41a of the restricting ring 41, through vulcanizing adhesion. The fulcrum portion 44 of each power transmitting arm 42 is compressed between the outer side 42a of the power transmitting arm 42 and the restricting surface 41a of the restricting ring 41. The force that acts against the compression presses the power transmitting arm 42 against the corresponding roller 39. In this state, the cylindrical surface 39a of each roller 39 is pressed against the sliding surface 43a of the engaging recess 43 of the corresponding power transmitting arm 42. Each sliding surface 43a is a curved concave surface. The curvature of the cylindrical surface 39a of each roller 39 is larger than that of the sliding surface 43a of each engaging recess 43. Accordingly, each roller 39 linearly contacts the corresponding sliding surface 43a.

A lidded cylindrical cover 45 has a flange 45a that is formed at its outer circumference. The cover 45 is securely fitted in the fitting groove 32c through the flange 45a, together with the engaging member 40. The cover 45 encompasses the front side of the pulley 32. The space between the cover 45 and the pulley 32 accommodates the components for the power transmission between the pulley 32 and the drive shaft 6 (such as the receiving member 35, the support pins 36, the engaging pins 38 (the rollers 39), the restricting ring 41, and the power transmitting arms 42).

As shown in Figs. 3 and 4, the contact position of the cylindrical surface 39a of each roller 39 and the sliding surface 43a of the corresponding engaging recess 43 is on an imaginary plane H. The imaginary plane H includes the axis L of the drive shaft 6 and the axis S of the corresponding roller 39. That is, when the pulley 32 and the receiving member 35 are not rotating and the variations of the load (torque) transmitted between the pulley 32 and the receiving member 35 is zero, the cylindrical surface 39a of the roller 39 contacts the sliding surface 43a of the engaging recess 43 only at a neutral position N. The neutral position N is not inclined with respect to the circumferential direction of the pulley 32.

The curvature of the curved concave surface of the sliding surface 43a of the engaging recess 43 is less than that of the cylindrical surface 39a of the roller 39. Thus, the interval between each power transmitting arm 42 and the corresponding roller 39 increases as the roller 39 moves away from the neutral position N. In other words, the sliding surface 43a inclines with respect to the circumferential direction of the pulley 32 at positions other than the neutral position N. The inclination angle gradually increases as the roller 39 moves away from the neutral position N. Therefore, when each roller 39 and the corresponding power transmitting arm 42 relatively moves in the circumferential direction of the pulley 32, the contact position of the cylindrical surface 39a of the roller 39 and the sliding surface 43a of the engaging recess 43 shifts from the neutral position N. Accordingly, each roller 39 applies force to the corresponding power transmitting arm 42 radially outward of the pulley 32.

### (Operation of Power Transmission Mechanism)

The power of the engine E is transmitted to the pulley 32 through the belt 33. The power is then transmitted to the receiving member 35 through the rollers 39 of the pulley 32 and the power transmitting arms 42 engaged with the rollers 39. Thus, the power is transmitted to the drive shaft 6. The power transmission moves the rollers 39 relative to the corresponding power transmitting arms 42 in accordance with the load of the compressor. This generates relative rotation between the pulley 32 and the receiving member 35.

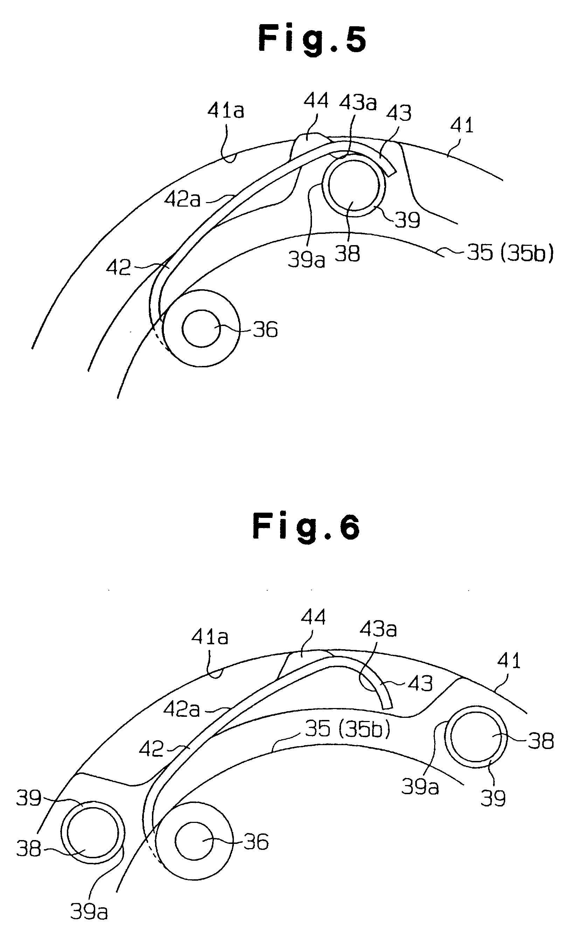

If the pulley 32 rotates clockwise as shown in Fig. 5, the receiving member 35 rotates relative to the pulley 32, or counterclockwise. Thus, each roller 39 moves relative to the corresponding power transmitting arm 42 in the circumferential direction of the pulley 32. This shifts the position at which the cylindrical surface 39a of each roller 39 contacts the sliding surface 43a of the corresponding engaging recess 43 from the neutral position N toward the distal end of the power transmitting arm 42. At this position, the sliding surface 43a of each engaging recess 43 is inclined with respect to the circumferential direction of the pulley 32. Thus, a portion of the power transmitting arm 42 distal from the fulcrum portion 44 elastically deforms in the radial outward direction of the pulley 32. In this state, the contact position between the cylindrical surface 39a of the roller 39 and the sliding surface 43a of the engaging recess 43 corresponds to a power point, and the position at which the fulcrum portion 44 abuts against the restricting surface 41a of the restricting ring 41 corresponds to a fulcrum point. That is, each power transmitting arm 42 is elastically deformed during the power transmission, thus permitting each engaging recess 43 to change its position with respect to the receiving member 35 (deformation of the sliding surface 43a).

If the compressor displacement increases, the transmission torque between the pulley 32 and the receiving member 35 becomes larger. This increases the force that acts to elastically deform the distal portion of each power transmitting arm 42 in the radial outward direction of the pulley 32. Thus, each roller 39 further elastically deforms the power transmitting arm 42 and moves relative to the corresponding power transmitting arm 42. In this state, each roller 39 slides along the corresponding sliding surface 43a while rolling on the same by the frictional force. Accordingly, the contact position between the cylindrical surface 39a of the roller 39 and the sliding surface 43a of the corresponding engaging recess 43 shifts further away from the neutral position N. As a result, the relative rotational angle between the pulley 32 and the receiving member 35 increases.

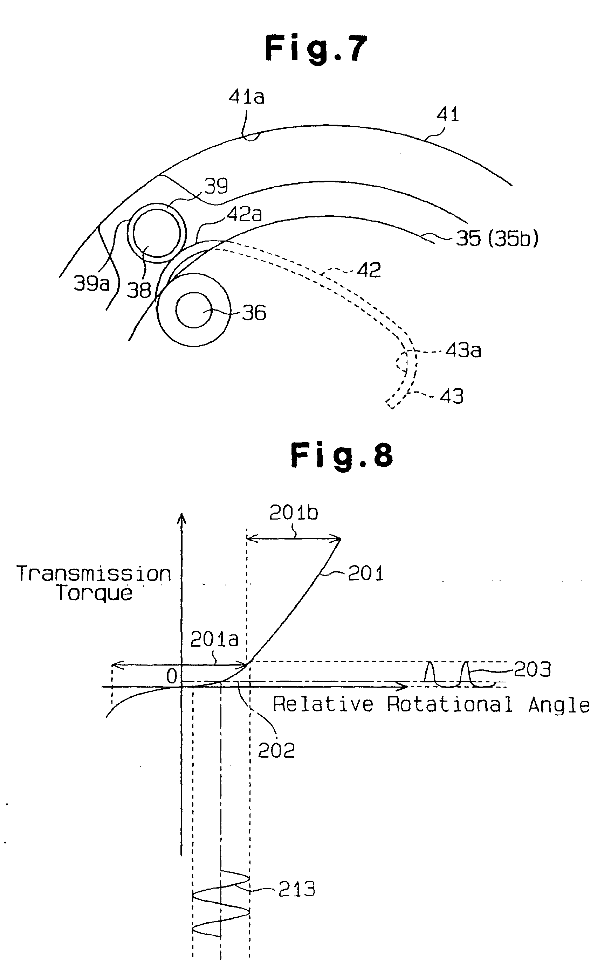

As the sliding surface 43a of each engaging recess 43 moves away from the neutral position N, the interval between the sliding surface 43a and the corresponding roller 39 increases. Thus, as the contact position of the cylindrical surface 39a of each roller 39 and the sliding surface of the corresponding engaging recess 43 moves away from the neutral position N, the elastic deformation of the power transmitting arm 42 with respect to the unit amount of movement of the contact position increases. That is, as the relative rotational angle between the pulley 32 and the receiving member 35 increases, the pressure by which each roller 39 is pressed against the corresponding power transmitting arm 42 gradually increases. Thus, the relative rotational angle of the pulley 32 with respect to the receiving member 35 gradually becomes difficult to increase. Therefore, as shown by a characteristic line 201 in the graph illustrated in Fig. 8, the increase of the transmission torque between the pulley 32 and the receiving member 35 is less than the increase of the relative rotational angle in a zone 201a in which the relative rotational angle of the pulley 32 and the receiving member 35 is relatively small.

When the contact position between the cylindrical surface 39a of each roller 39 and the sliding surface 43a of the corresponding engaging recess 43 moves away from the neutral position N by a large amount, the partial elastic deformation exceeds the overall elastic deformation. The partial elastic deformation acts to flatten each concave sliding surface 43a. The overall elastic deformation applies to each power transmitting arm 42, the fulcrum of which is the contact position between the fulcrum portion 44 and the restricting surface 41a of the restricting ring 41. That is, once the relative rotational angle between the pulley 32 and the receiving member 35 increases to a predetermined amount, the power transmitting arm 42 is pressed against the roller 39 at a constant increase amount of pressure in the relative rotational angle zone greater than or equal to the predetermined amount. Therefore, as shown by the characteristic line 201 in the graph illustrated in Fig. 8, the increase of the transmission torque between the pulley 32 and the receiving member 35 is constant with respect to the increase of the relative rotational angle in a zone 201b in which the relative rotational angle between the pulley 32 and the receiving member 35 is relatively large.

As described, as long as the load torque of the compressor does not adversely affect the engine E, or remains less than a maximum value, the contact position between the cylindrical surface 39a of each roller 39 and the sliding surface 43a of the corresponding engaging recess 43 is maintained within the sliding surface 43a. The relative rotation of the pulley 32 and the receiving member 35 is maintained within the predetermined angular range. That is, each roller 39 is maintained as engaged with the corresponding engaging recess 43 such that power is continuously transmitted from the engine E to the drive shaft 6.

However, as shown in Fig. 6, if the load torque of the compressor becomes equal to or larger than the maximum value due to a problem (for example, deadlocking) of the compressor, the elastic force of each power transmitting arm 42 cannot hold the contact position between the cylindrical surface 39a of each roller 39 and the sliding surface 43a of the corresponding engaging recess 43 within the sliding surface 43a. Thus, each roller 39 falls from the corresponding sliding surface 43a in a distal direction of the power transmitting arm 42, or separates from the engaging recess 43, such that the roller 39 is disengaged from the power transmitting arm 42. This blocks the power transmission from the pulley 32 to the receiving member 35. Accordingly, the engine E is prevented from being affected by the excessive load torque of the compressor.

When each roller 39 is disengaged from the corresponding power transmitting arm 42, the pulley 32 freely rotates relative to the receiving member 35. Thus, each roller 39, which is attached to the pulley 32, contacts the outer side 42a of the adjacent power transmitting arm 42 on the movement path of the roller 39, or the power transmitting arm 42 that has been located adjacent to the original power transmitting arm 42 during the power transmission. Thus, as shown in Fig. 7, force that acts to rotate the power transmitting arm 42 around the support pin 36 is generated. Accordingly, the power transmitting arm 42, together with the associated sleeve 37 that securely supports the power transmitting arm 42, rotates clockwise around the support pin 36.

Accordingly, although the engaging recess 43 of each power transmitting arm 42 is located radially outward from the pulley 32 immediately after separation from the corresponding roller 39, the engaging recess 43 returns to a position near the drive shaft 6. This motion is performed by the roller 39 abutting against the power transmitting arm 42 once during an about quarter cycle of rotation of the pulley 32.

As described, each sleeve 37 is fitted around the associated support pin 36 through appropriate pressure. Thus, if an external force (for example, force generated by vibration of the vehicle) acts on each sleeve 37, the sleeve 37 reliably holds the corresponding power transmitting arm 42 at a position retreated from the corresponding roller 39 (the state of Fig. 7). This prevents noise and vibration from being otherwise caused by repeated hitting of the rollers 39 and the power transmitting arms 42.

When the engine E actually drives the compressor and the output torque of the engine E or the drive torque of an auxiliary device driven by the engine E other than the compressor (for example, a hydraulic pump of a power steering device) varies, the transmission torque between the pulley 32 and the receiving member 35 also varies. In this state, the contact position between the cylindrical surface 39a of each roller 39 and the sliding surface 43a of the corresponding engaging recess 43 repeatedly shifts with respect to the neutral position N. That is, the pulley 32 repeatedly alternates clockwise movement and counterclockwise movement relative to the receiving member 35. This dampens the variation of the transmission torque between the pulley 32 and the receiving member 35.

When the shifting of the contact position between cylindrical surface 39a of each roller 39 and the sliding surface 43a of the corresponding engaging recess 43 with respect to the neutral position is repeated, resistance to the sliding friction occurs between the cylindrical surface 39a and the sliding surface 43a. This further effectively dampens the variation of the transmission torque.

The first embodiment provides the following advantages.
(1) As shown in Fig. 8, according to the power transmission mechanism PT of the first embodiment, the great relative rotational angle between the pulley 32 and the receiving member 35 is maintained even when the displacement of the compressor is small and thus the drive torque is small (a dashed line having long and short segments 202).

Thus, even when the torque variation with great amplitude occurs in the engine E similarly to the prior art, as shown by a curved line 213 in Fig. 8, the pulley 32 does not rotate relative to the receiving member 35 in the opposite direction to the normal torque transmission direction. In this case, the opposite direction corresponds to the direction with respect to the position of the pulley 32 and the receiving member 35 when the variation of the transmission torque is zero. The pulley 32 does not rotate in the opposite direction even around the valleys of the torque variation in the engine E (left side peaks of the curved line 213).

Therefore, the amplitude of the torque variation (a curved line 203) that occurs in the power transmission between the receiving member 35 and the compressor is decreased. Thus, the torque acting in the opposite direction to the normal torque transmission direction (negative torque) is prevented from occurring even around the valley of the torque variation (lower side peaks of the curved line 203). Therefore, for example, if there is a backlash in the torque transmission direction between the cylindrical member 35a and the drive shaft 6 or between the cylindrical member 35a and the hub 35b, or at the hinge mechanism 13 in the compressor, abnormal vibration and noise are prevented from being caused.

As is described in the prior art, the above explanation with reference to Fig. 8 is provided on the assumption that the compressor (receiving member 35) rotates at a constant speed and the pulley 32 rotates in correspondence with the output torque variation of the engine E.
(2) The sliding surface 43a of each corresponding engaging recess 43 is a curved concave surface. Thus, for example, as compared to the case in which each sliding surface is formed by connecting surfaces each inclined at a different angle with respect to the circumferential direction of the pulley 32 (which remains within the scope and spirit of the present invention), the sliding surface 43a is easily formed. Further, the cylindrical surface 39a of each roller 39 smoothly slides along the sliding surface 43a. This allows the pulley 32 to smoothly rotate relative to the receiving member 35, thus effectively dampening the variation of the transmission torque.
(3) Each engaging recess 43 is provided on the power transmitting arm 42 that functions as an elastic member and secured to the hub 35b. The elastic deformation of each power transmitting arm 42 permits the engaging recess 43 to change its position with respect to the hub 35b (deformation of the sliding surface 43a). In other words, each elastic member 42 is located in a power transmitting path and is used as a power transmitting member. This structure needs fewer power transmitting members, as compared to, for example, the case in which the elastic member is not located in the power transmitting path.
(4) Each power transmitting arm 42 is a plate spring, and bending the power transmitting arm 42 forms each engaging recess 43. The engaging recesses 43 are thus easily formed.
(5) When the transmission torque varies, the contact position between the cylindrical surface 39a of each roller 39 and the sliding surface 43a of the corresponding engaging recess 43 repeatedly shifts in opposite directions along the sliding surface 43a. This varies the interval between the contact position and the fulcrum point with respect to which each power transmitting arm 42 deforms (the abutment position of the fulcrum portion 44 against the restricting ring 41). Thus, the elastic coefficient of the power transmitting arm 42 constantly changes. This suppresses vibration resonance in relative rotation between the pulley 32 and the receiving member 35.
(6) Each roller 39 slides along the sliding surface 43a of the corresponding engaging recess 43 while rolling on the same. Thus, for example, as compared to the structure in which each engaging pin 38, which is an engaging projection, directly contacts the sliding surface 43a of the corresponding engaging recess 43 (which remains within the scope and spirit of the present invention), insufficient sliding performance due to friction between the engaging pin 38 and the sliding surface 43a is suppressed. Further, the variation of the transmission torque reliably permits each engaging projection 39 to slide in the corresponding engaging recess 43. Accordingly, the aforementioned effect of dampening the transmission torque variation is further reliably obtained.
(7) During the torque transmission, each power transmitting arm 42 elastically deforms in the radial direction of the pulley 32. If the torque transmission is blocked, the power transmitting arm 42 rotates in the radial direction of the pulley 32. Thus, it is unnecessary to save space for deformation and rotation of each power transmitting arm 42 in the axial direction L. This minimizes the power transmission mechanism PT and the compressor with this power transmission mechanism PT in the axial direction L. Particularly, if the compressor is used in a vehicle air conditioner, it is undesirable to enlarge the compressor in the axial direction L rather than in the radial direction in terms of the shape of an engine compartment in which the compressor is installed. Accordingly, the power transmission mechanism PT of the first embodiment has a configuration that is preferred for use in the compressor of a vehicle air conditioner.
(8) The cover 45 encompasses the pulley 32. The space between the cover 45 and the pulley 32 accommodates the power transmitting members (the receiving member 35, the support pins 36, the engaging pins 38, the restricting ring 41, the power transmitting arms 42, and the like). The power transmitting members are thus protected from contamination by substance such as water or oil or dust in the engine compartment. This suppresses a decrease in durability due to the contamination of the power transmitting members. Further, for example, a foreign object is prevented from being caught between each roller 39 and the associated engaging pin 38 or the cylindrical surface 39a of the roller 39 and the sliding surface 43a of the corresponding engaging recess 43. This maintains smooth rolling of each roller 39.

### Second Embodiment

Next, a second embodiment of the present invention will be described. Only the parts different from the first embodiment are explained. Like members are given the like numbers and detailed explanations are omitted.

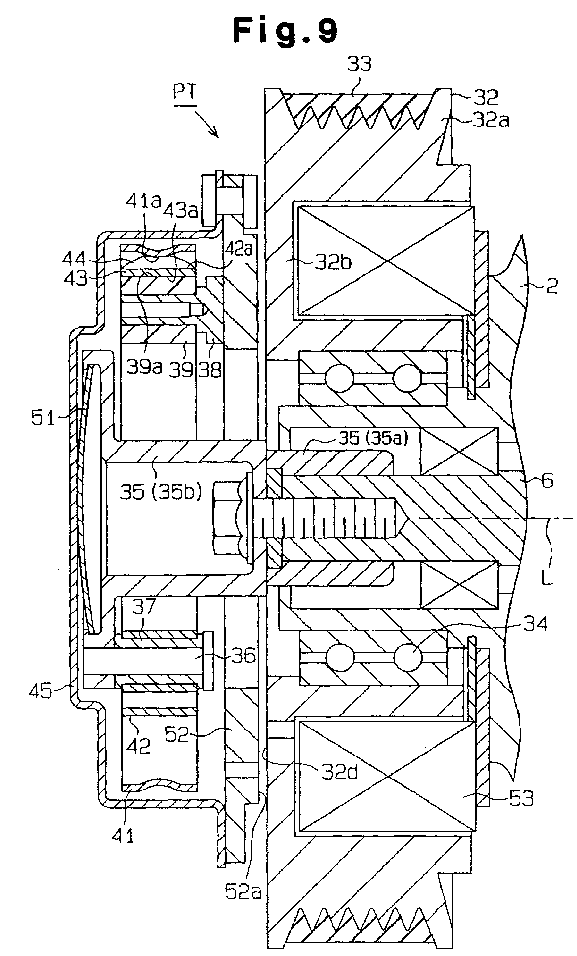

As shown in Fig. 9, in the second embodiment, the pulley 32 has an electromagnetic clutch mechanism that is capable of selectively permits and blocks power transmission in accordance with external electric controlling. That is, the hub 35b supports the cover 45 through a plate spring 51. The cover 45 securely supports an armature 52 that is located between the pulley 32 and the restricting ring 41. The armature 52 securely supports the engaging pins 38. The restricting ring 41 does not engage with the pulley 32. The restricting ring 41 is fitted around the power transmitting arms 42 and is thus supported. A core 53 is located in the pulley 32 in the front housing member 2.

When the core 53 is excited through external power supply, the pulley 32 attracts the armature 52 and the cover 45, together with the rollers 39 or the like, against the force of the plate spring 51. A clutch surface 52a of the armature 52 is thus pressed against a clutch surface 32d of the pulley 32. This permits power transmission between the pulley 32 and the engaging pins 38 (the rollers 39).

When the external power supply is nullified in this state to de-excite the core 53, the force of the plate spring 51 urges the armature 52 and the cover 45, together with the roller 39 or the like, away from the pulley 32. The clutch surfaces 32d, 52a thus separate from each other to block the power transmission between the pulley 32 and the engaging pins 38.

In this embodiment, the compressor can be stopped through external controlling when, for example, cooling is unnecessary. This reduces the power loss of the engine E.

The present invention may be embodied in the following forms without departing from the scope of the invention.

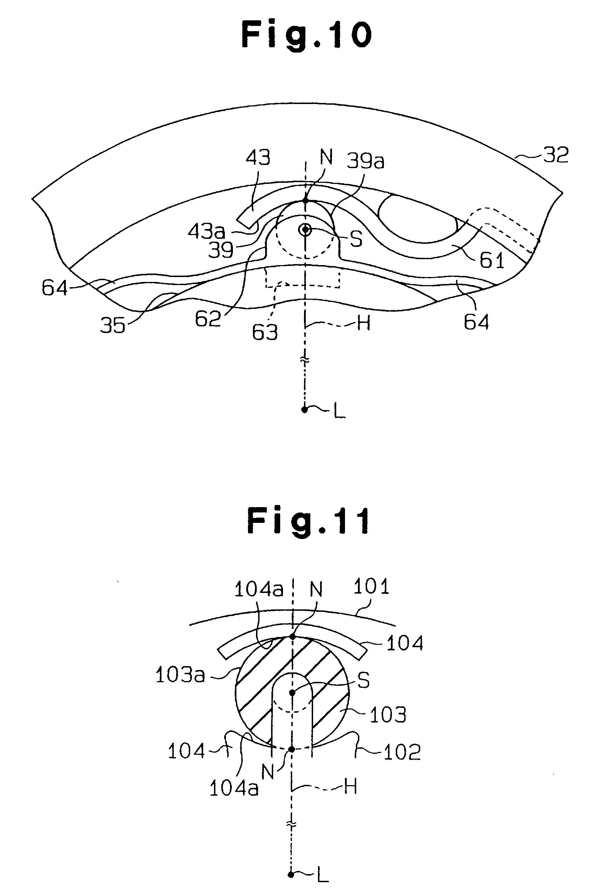

For example, as shown in Fig. 10, the pulley 32, or the second rotary body, may include power transmitting arms 61, or plate springs that each include the engaging recess 43. Further, the receiving member 35, or the first rotary body, includes the rollers 39, or the engaging projection. In this case, an engaging member 62 that rotationally supports each roller 39 is detachably attached to a connecting recess 63 of the receiving member 35. A spring 64 urges each engaging member 62 away from the receiving member 35. The engagement between each engaging member 62 and the receiving member 35 (the connecting recess 63) is maintained through the engagement between the corresponding roller 39 and the engaging recess 43.

If the transmission torque between the pulley 32 and the receiving member 35 becomes excessive and each roller 39 falls from the corresponding engaging recess 43, the force of the urging spring 64 separates the associated engaging member 62 from the corresponding connecting recess 63 of the receiving member 35. That is, when the transmission torque between the pulley 32 and the receiving member 35 is excessive, each roller 39 (each engaging member 62) separates from the pulley 32 and the receiving member 35. Thus, the power transmission between the pulley 32 and the receiving member 35 is reliably blocked.

An engaging recess 104 of the prior art shown in Fig. 12 may be changed to an engaging recess shown in Fig. 11. That is, as shown in Fig. 11, the curvature of a curved concave surface 104a of at least one of the engaging recess 104 in a pulley 101 and the engaging recess 104 in a hub 102 is smaller than the curvature of a cylindrical surface 103a of an elastic member 103 (both curved concave surfaces 104a are smaller than the curvature of the cylindrical surface 103a of the elastic member 103 in the figures). When the transmission torque is zero, the contact position between the sliding surface 104a of each engaging recess 104 and the cylindrical surface 103a of the elastic member 103 is on the imaginary plane H. In this case, if the pulley 101 is referred to as the first rotary body, the elastic member 103 engaged with the engaging recess 104 of the pulley 101 is referred to as the engaging projection of the pulley 101. On the other hand, if the pulley 101 is referred to as the second rotary body, the elastic member 103 engaged with the engaging recess 104 of the hub 102, the hub 102 being the first rotary body, is referred to as the engaging projection of the hub 102.

In the second embodiment, the power transmitting arms 42 may be substantially rigid. Further, the restricting ring 41 is configured to elastically deform in a direction to increase its radius and a direction to decrease the same. Thus, even if each roller 39 engages with the corresponding engaging recess 43, each power transmitting arm 42 rotates around the associated support pin 36 in accordance with the transmission torque. This permits each engaging recess 43 to change its position with respect to the receiving member 35.

Each engaging pin 38 (each roller 39) may be located radially inward from each support pin 36 in the pulley 32.

In each power transmitting arm 42, a portion of the outer side 42a may be cut and bent to form the support portion 44 integrally with the power transmitting arm 42.

A ball may replace each roller 39 as the rolling component.

Each support pin 36 and each engaging pin 38 may be provided along the radial direction such that each power transmitting arm 42 may elastically deform in the axial direction L of the pulley 32 when torque transmission is permitted and rotates in the same direction when the torque transmission is blocked.

The engaging recess 43 may be provided on the engaging pin 38 side, and the roller 39 that engages with the engaging recess 43 may be located at the distal portion of each power transmitting arm 42. In this case, the pulley 32 is the second rotary body, and the receiving member 35 is the first rotary body.

Each engaging recess 43 and each engaging projection 39 may be configured to change its position with respect to the rotary bodies 32, 35, respectively. In this case, elastic member is provided for the engaging recess 43 and the engaging projection 39, respectively.

A spring may be located between each power transmitting arm 42 and the receiving member 35 for urging the power transmitting arm 42 in the radial inward direction of the pulley 32. The spring may be configured to, for example, urge the power transmitting arm 42 toward the drive shaft 6. Alternatively, the spring may be located between each support pin 36 and the associated sleeve 37 for urging the sleeve 37 to rotate. In these structures, if each roller 39 separates from the corresponding power transmitting arm 42, the power transmitting arm 42 may be rotated to a retreated position without contacting the roller 39. This reliably prevents noise or vibration from being otherwise caused by impact due to hitting of each power transmitting arm 42 and the corresponding roller 39.

The second embodiment may be modified such that the electromagnetic clutch structure is located between the receiving member 35 and the drive shaft 6.

Each power transmission mechanism PT does not necessarily have to be used for the power transmission between the engine E and the air-conditioner compressor. The power transmission mechanism PT may be used for power transmission between the engine E and an auxiliary device other than the air-conditioner compressor (for example, a hydraulic pump of a power steering device, a mechanical supercharger, and a radiator cooling fan). Further, application of the power transmission mechanism PT of the illustrated embodiments is not restricted to a power transmitting path of a vehicle. For example, the power transmission mechanism PT may be applied to a power transmitting path of a machine tool between a drive source and a machining device. In other words, the power transmission mechanism PT of the illustrated embodiments may be generally used in any power transmitting path.

## Claims

1. A power transmission mechanism **characterized by**:
a first rotary body, wherein the first rotary body has an engaging projection;
a second rotary body, which is located coaxial with the first rotary body, wherein the second rotary body has an engaging recess;
the engaging projection engaging with the engaging recess to connect the first and second rotary bodies to each other such that power transmission is permitted;
at least one of the engaging projection and the engaging recess being configured to change its position with respect to the first and second rotary bodies; and
an elastic member, wherein, during the power transmission between the first and second rotary bodies, the elastic member permits at least one of the engaging projection and the engaging recess to change its position, thereby enabling the rotary bodies to rotate relative to each other in a predetermined angular range;
wherein, during the power transmission between the first and second rotary bodies, the engaging projection normally abuts against a sliding surface of the engaging recess at a neutral position, and the contact position of the sliding surface of the engaging recess and the engaging projection separates from the neutral position in accordance with the increase of the transmission torque between the rotary bodies; and
wherein, as the contact position separates from the neutral position, the inclination angle of the sliding surface of the engaging recess with respect to the circumferential direction of the rotary bodies gradually increases.

2. The power transmission mechanism according to claim 1, wherein the sliding surface of the engaging recess is a curved concave surface.

3. The power transmission mechanism according to claims 1 or 2, wherein the engaging projection has a curved projection surface, and the curved projection surface engages with the sliding surface of the engaging recess.

4. The power transmission mechanism according to claim 3, wherein the curvature of the engaging projection is larger than that of the sliding surface of the engaging recess, wherein the neutral position, at which the engaging projection and the engaging recess are engaged, is provided on a line that includes the center of the first and second rotary bodies and the center of the curvature of the engaging projection.

5. The power transmission mechanism according to any one of claims 1 to 4, wherein at least one of the engaging projection and the engaging recess is coupled to the associated rotary body through the elastic member.

6. The power transmission mechanism- according to claim 5, wherein the elastic member is a plate spring, and one end of the plate spring is secured to the rotary body, and the other end is provided with at least one of the engaging projection and the engaging recess.

7. The power transmission mechanism according to any one of claims 1 to 6, wherein the elastic member changes its elastic coefficient in accordance with variation in a relative rotational angle between the rotary bodies.

8. The power transmission mechanism according to any one of claims 1 to 7, wherein the engaging projection is a rolling component, wherein the rolling component is rotatably supported by the first rotary body and rotates along the sliding surface of the engaging recess.

9. The power transmission mechanism according to any one of claims 1 to 8, wherein, when the transmission torque exceeds a predetermined value, the engaging recess separates from the engaging projection to block the power transmission between the first and the second rotary bodies.

10. The power transmission mechanism according to claim 9, wherein the engaging projection or the engaging recess is provided on a power transmitting arm, wherein the power transmitting arm is rotatably supported by the corresponding rotary body, and wherein, when the rotary bodies relatively rotate with each other after the engaging projection is disengaged from the engaging recess, the power transmitting arm changes its position to a retreated position not to interfere with the engaging projection or the engaging recess.

11. The power transmission mechanism according to any one of claims 1 to 10, wherein one of the first rotary body and the second rotary body is coupled to an external drive source by a clutch mechanism.

12. The power transmission mechanism according to any one of claims 1 to 11, comprising a cover, wherein the cover encompasses the engaging projection, the engaging recess, and the elastic member.

13. The power transmission mechanism according to claim 10, wherein the power transmitting arm is rotatably supported by the associated rotary body.

14. A power transmission mechanism **characterized by**:
a pulley, wherein the pulley has a plurality of engaging projections;
a receiving member, which is located coaxial with the pulley, wherein the receiving member has a plurality of engaging recesses corresponding to the engaging projections;
the engaging projection engaging with the corresponding engaging recess to connect the pulley and the receiving member to each other such that power transmission is permitted;
wherein, the engaging recess deforms with respect to the pulley and the receiving member;
an elastic member, wherein, during the power transmission between the pulley and the receiving member, the elastic member permits the engaging recess to deform, thereby enabling the pulley and the receiving member to rotate relative to each other in a predetermined angular range;
wherein, during the power transmission between the pulley and the receiving member, the engaging projection normally abuts against a sliding surface of the engaging recess at a neutral position, and the contact position of the engaging projection and the engaging recess separates from the neutral position in accordance with the increase of the load on the receiving member; and
wherein, as the contact position separates from the neutral position, the inclination angle of the sliding surface of the engaging recess with respect to the circumferential direction of the rotary bodies gradually increases.
